(19) Europäisches Patentamt / European Patent Office / Office européen des brevets

(11) **EP 3 366 720 B1**

(12) **EUROPEAN PATENT SPECIFICATION**

(45) Date of publication and mention of the grant of the patent:
**08.04.2020 Bulletin 2020/15**

(21) Application number: **16857586.8**

(22) Date of filing: **21.10.2016**

(51) Int Cl.:
*C08L 7/00* (2006.01)  *C08K 5/103* (2006.01)
*C08K 5/42* (2006.01)  *C08L 71/02* (2006.01)
*C08L 101/00* (2006.01)  *C08K 5/20* (2006.01)
*B60C 1/00* (2006.01)  *B29B 7/90* (2006.01)
*B29B 7/28* (2006.01)

(86) International application number:
**PCT/JP2016/081361**

(87) International publication number:
**WO 2017/069273 (27.04.2017 Gazette 2017/17)**

(54) **RUBBER COMPOSITION AND TIRE OBTAINED THEREFROM**

KAUTSCHUKZUSAMMENSETZUNG UND DARAUS HERGESTELLTER REIFEN

COMPOSITION DE CAOUTCHOUC ET PNEU OBTENU À L'AIDE DE CETTE DERNIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.10.2015 JP 2015208197**

(43) Date of publication of application:
**29.08.2018 Bulletin 2018/35**

(73) Proprietor: **Bridgestone Corporation**
**Tokyo 104-8340 (JP)**

(72) Inventor: **YABE Yudai**
**Tokyo 104-8340 (JP)**

(74) Representative: **Oxley, Robin John George**
**Marks & Clerk LLP**
**15 Fetter Lane**
**London EC4A 1BW (GB)**

(56) References cited:
**EP-A1- 2 799 481**      **WO-A1-2014/119671**
**JP-A- H09 249 771**   **JP-A- 2000 191 829**
**JP-A- 2002 275 311**   **JP-A- 2006 083 264**
**JP-A- 2013 056 992**   **JP-A- 2014 210 829**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a rubber composition and a tire obtained therefrom, more in detail to a rubber composition excellent in fracture resistance, wear resistance, and on-ice performance, and a tire obtained therefrom, and more particularly to a studless tire.

BACKGROUND ART

Conventionally, in view of improving the safety of a vehicle, various studies have been conducted to improve braking performance and driving performance of a tire on various road surfaces including not only a dry road surface but also a wet road surface, an ice/snow road surface, and the like.

For example, in order to improve on-ice performance, low fuel consumption performance, wear resistance, and heat aging resistance of a tire in a balanced manner, in Patent Document 1, there is proposed a rubber composition for a studless tire which contains: a modified natural rubber that is highly purified and has a pH adjusted to 2 to 7; and a carbon black and/or a white filler.

JP 2006 083264 A discloses a rubber composition that comprises 100 parts by mass of a rubber component with 0.1-10 parts by mass of at least one kind of a nonionic surfactant.

JP 2013 056992 A discloses a rubber composition that is used for a tire tread portion.

WO 2014/119671 A1 discloses a friction transmission belt.

JP H09 249771 A discloses a composition that comprises 100 pts. wt. rubber component, 1-70 pts. wt. fibrous xonotlite having a BET specific surface area (nitrogen adsorption method) of $21 m^2/g$ or above and 5-70 pts. wt. carbon black.

RELATED ART DOCUMENT

PATENT DOCUMENT

Patent Document 1: Japanese Unexamined Patent Application Publication No. 2014-227487

SUMMARY OF THE INVENTION

PROBLEMS TO BE SOLVED BY THE INVENTION

In studless tires obtained from the rubber composition for a studless tire as disclosed in Patent Document 1 and further from various rubber compositions which have been proposed so far, an improvement of on-ice performance together with various performances of a tire has been made. However, a further improvement of such performances has been desired still nowadays.

Thus, it is an object of the present invention to provide a rubber composition excellent in fracture resistance, wear resistance, and on-ice performance and a tire obtained therefrom, more particularly a studless tire.

MEANS FOR SOLVING THE PROBLEMS

In order to solve the above problems, the present inventors intensively studied so as to find out that a specific surface active agent is used together with a short fiber, whereby the above problems can be solved, and the present invention has been accomplished.

In other words, a rubber composition of the present invention is a rubber composition containing: a diene-based rubber component: a short fiber; and a surface active agent, wherein the short fiber and the surface active agent are blended in advance with each other to form a composite, and the composite is compounded; wherein the surface active agent contains a fatty acid polyhydric alcohol ester, a nonionic ester type surface active agent, an alkanolamide type surface active agent, and a sulfonic acid type surface active agent; and wherein in relation to 100 parts by mass of the surface active agent, 40 to 70 parts by mass of a nonionic ester type surface active agent is contained.

The rubber composition of the present invention can be suitably compounded with a foaming agent.

A tire of the present invention is characterized by being obtained from the rubber composition.

The tire of the present invention is preferably a studless tire.

EFFECTS OF THE INVENTION

According to the present invention, there can be provided a rubber composition excellent in fracture resistance, wear resistance, and on-ice performance and a tire obtained therefrom, more particularly a studless tire.

BRIEF DESCRIPTION OF THE DRAWING

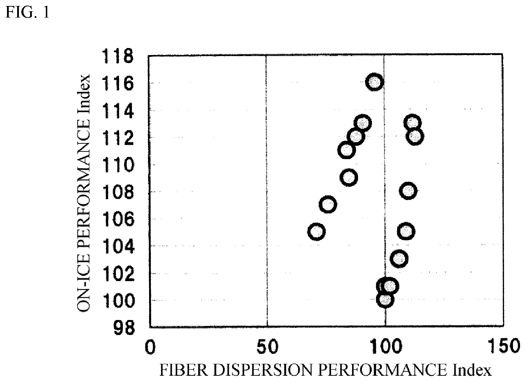

FIG. 1 is a graph illustrating a relationship between fiber dispersion performance and on-ice performance in examples and comparative examples.

MODE FOR CARRYING OUT THE INVENTION

Hereinafter, embodiments of the present invention will be specifically described.

A rubber composition of the present invention is a rubber composition containing: a diene-based rubber component: a short fiber; and a surface active agent, wherein the short fiber and the surface active agent are blended in advance with each other to form a composite, and the composite is compounded; wherein the surface active agent contains a fatty acid polyhydric alcohol ester, a nonionic ester type surface active agent, an alkanolamide type surface active agent, and a sulfonic acid type surface active agent; and wherein in relation to 100 parts by mass of the surface active agent, 40 to 70 parts by mass of a nonionic ester type surface active agent is contained.

The diene-based rubber component which can be used for the rubber composition of the present invention is not particularly limited, and a natural rubber (NR) as well as a synthetic rubber, such as a polyisoprene rubber (IR), a styrene-butadiene copolymer rubber (SBR), a polybutadiene rubber (BR), an ethylene-propylene-diene rubber (EPDM), a chloroprene rubber (CR), a halogenated butyl rubber, and an acrylonitrile-butadiene rubber (NBR) can be used, and especially, the natural rubber (NR), the styrene-butadiene copolymer rubber (SBR), and the butadiene rubber (BR) are preferable. Such rubber components may be used alone or in combination of two or more thereof.

The rubber composition of the present invention contains, together with the diene-based rubber component as described above, the short fiber and the specific surface active agent, thereby being excellent in fracture resistance, wear resistance, and on-ice performance, and a tire obtained from such a rubber composition is particularly preferably a studless tire.

A material of the short fiber is not to be particularly limited, and a short fiber made of a normal synthetic resin can be suitably employed. When the rubber composition compounded with such a short fiber is used for a tread, a drainage groove is formed due to this short fiber as the tread wears after the vulcanization, and on-ice performance is improved. Preferably, the rubber composition is compounded with a foaming agent, whereby bubbles having a long shape are formed along this short fiber, and a further improvement of a drainage performance can be made. Further, as a resin which composes the short fiber, a hydrophilic resin is employed, thereby utilizing the affinity with the water to be also capable of exhibiting a further favorable drainage performance.

As the resin which composes the short fiber, a polyethylene, a polypropylene, an ethylene-vinyl alcohol copolymer, a vinyl alcohol homopolymer, a poly (meth) acrylic acid or an ester thereof, a polyethylene glycol, a carboxy vinyl copolymer, a styrene-maleic acid copolymer, a polyvinyl pyrrolidone, a vinyl pyrrolidone-vinyl acetate copolymer, a mercaptoethanol, and the like can be cited. Especially, an ethylene-vinyl alcohol copolymer, a vinyl alcohol homopolymer, and a poly (meth) acrylic acid are preferable, and an ethylene-vinyl alcohol copolymer is particularly preferable.

An average length of the short fiber used in the present invention is preferably 0.1 to 500 mm, more preferably 0.1 to 7 mm. Moreover, an average diameter is preferably 0.001 to 2 mm, more preferably 0.005 to 0.5 mm. When the average length and the average diameter fall within the above preferable ranges, there is no risk that the fibers are entangled with each other more than necessary and a favorable dispersion performance is inhibited. Further, an aspect ratio is preferably 10 to 4,000, more preferably 50 to 2,000.

Moreover, an amount of the short fiber compounded in relation to 100 parts by mass of the rubber component is preferably 0.1 to 100 parts by mass, more preferably 0.1 to 50 parts by mass. The amount of the short fiber is adapted to fall within the above preferable range, thereby being capable of providing effectively both a favorable drainage performance and an excellent dispersion performance in the rubber component.

The surface active agent which can be used in the present invention contains at least one material selected from the group consisting of a fatty acid polyhydric alcohol ester, a nonionic ester type surface active agent, an alkanolamide type surface active agent, and a sulfonic acid type surface active agent. Together with the short fiber, such a surface active agent is blended, whereby a dispersion performance of the short fiber is improved and an improvement of fracture resistance, wear resistance, and on-ice performance can be made. In the present invention, the fatty acid polyhydric alcohol ester, the nonionic ester type surface active agent, the alkanolamide type surface active agent, and the sulfonic acid type surface active agent are contained. Further, in the present invention, in relation to 100 parts by mass of the surface active agent, 40 to 70 parts by mass of the nonionic ester type surface active agent is contained.

As the fatty acid polyhydric alcohol ester, glycerol monolaurate, glycerol monooleate, glycerol monostearate, glycerol dilaurate, glycerol dioleate, glycerol distearate, glycerol trilaurate, glycerol trioleate, glycerol tristearate, sorbitan monolaurate, sorbitan monooleate, sorbitan monostearate, sorbitan dilaurate, sorbitan dioleate, sorbitan distearate, sorbitan trilaurate, sorbitan trioleate, sorbitan stearate, a castor oil, a hardened castor oil, and the like can be cited.

As the nonionic ester type surface active agent, polyoxyalkylene glycerol monolaurate, polyoxyalkylene glycerol monooleate, polyoxyalkylene glycerol monostearate, polyoxyalkylene glycerol dilaurate, polyoxyalkylene glycerol dioleate, polyoxyalkylene glycerol distearate, polyoxyalkylene glycerol trilaurate, polyoxyalkylene glycerol trioleate, polyoxyalkylene glycerol tristearate, polyoxyalkylene sorbitan monolaurate, polyoxyalkylene sorbitan monooleate, polyoxyalkylene sorbitan monostearate, polyoxyalkylene sorbitan dilaurate, polyoxyalkylene sorbitan dioleate, polyoxyalkylene sorbitan distearate, polyoxyalkylene sorbitan trilaurate, polyoxyalkylene sorbitan trioleate, polyoxyalkylene sorbitan tristearate, polyoxyalkylene castor oil monolaurate, polyoxyalkylene castor oil monooleate, polyoxyalkylene castor oil monostearate, polyoxyalkylene castor oil dilaurate, polyoxyalkylene castor oil dioleate, polyoxyalkylene castor oil distearate, polyoxyalkylene castor oil trilaurate, polyoxyalkylene castor oil trioleate, polyoxyalkylene castor oil tristearate, polyoxyalkylene hardened castor oil monolaurate, polyoxyalkylene hardened castor oil monooleate, polyoxyalkylene hardened castor oil monostearate, polyoxyalkylene hardened castor oil dilaurate, polyoxyalkylene hardened castor oil dioleate, polyoxyalkylene hardened castor oil distearate, polyoxyalkylene hardened castor oil trilaurate, polyoxyalkylene hardened castor oil trioleate, polyoxyalkylene hardened castor oil tristearate, and the like can be cited.

As the alkanolamide type surface active agent, lauric acid diethanolamide, coconut fatty acid diethanolamide, myristic acid diethanolamide, palmitic acid diethanolamide, stearic acid diethanolamide, oleic acid diethanolamide, polyoxyethylene octyl amide, polyoxyethylene lauryl amide, polyoxyethylene stearyl amide, polyoxyethylene oleyl amide, and the like can be cited.

As the sulfonic acid type surface active agent, an alkyl sulfonate, such as sodium octyl sulfonate, sodium decyl sulfonate, sodium dodecyl sulfonate, lithium tetradecyl sulfonate, and potassium hexadecyl sulfonate; an alkyl benzene sulfonate having an alkyl group, such as potassium octyl benzene sulfonate and sodium dodecyl benzene sulfonate; a 1,2-bis(dialkyl oxycarbonyl)-ethanesulfonate having an alkyl group, such as sodium 1,2-bis(dibutyl oxycarbonyl)-ethanesulfonate, potassium 1,2-bis(dipentyl oxycarbonyl)-ethanesulfonate, lithium 1,2-bis(dihexyl oxycarbonyl)-ethanesulfonate, sodium 1,2-bis(diheptyl oxycarbonyl)-ethanesulfonate, sodium 1,2-bis(dioctyl oxycarbonyl)-ethanesulfonate, lithium 1,2-bis(dinonyl oxycarbonyl)-ethanesulfonate, sodium 1,2-bis(didecyl oxycarbonyl)-ethanesulfonate, sodium 1,2-bis(diundecyl oxycarbonyl)-ethanesulfonate, sodium 1,2-bis(didodecyl oxycarbonyl)-ethanesulfonate, and the like can be cited.

Moreover, a surface active agent amount in 100 parts by mass of the rubber component is preferably 0.0003 to 15.0 parts by mass, more preferably 0.003 to 10.0 parts by mass. Further, a surface active agent adhesion amount onto a fiber surface is, in relation to 100 parts by mass of the fiber, preferably 0.03 parts by mass to 15.0 parts by mass, more preferably 0.3 parts by mass to 10.0 parts by mass. The surface active agent which falls within the above preferable range is used, whereby an excellent dispersion performance of the short fiber can be obtained without having a bad influence on various physical properties.

In the rubber composition of the present invention, the surface active agent is applied onto a surface of the short fiber in advance so as to be a composite which is then compounded with the diene-based rubber component. Thereby, dispersion performance of the short fiber can be further improved.

An adhesion percentage of the surface active agent in the composite is preferably 0.3 to 0.6% by mass.

The rubber composition of the present invention is preferably compounded with a foaming agent, and compounding a foaming agent allows a gas generated from the foaming agent during a vulcanization process to disperse in the rubber and allows such a gas to form bubbles having a shape in accordance with a shape of the short fiber as molten. Such bubbles are present in the rubber, thereby being capable of allowing a function as a drainage groove to be exhibited as the tire wears and allowing the tire to be provided with a further excellent drainage performance.

As the above foaming agent, specifically, for example, azodicarbonamide (ADCA), dinitrosopentamethylenetetramine (DPT), dinitrosopentastyrenetetramine, benzene sulfonyl hydrazide derivatives, p, p'-oxybis benzene sulfonyl hydrazide (OBSH), ammonium bicarbonate, sodium bicarbonate, and ammonium carbonate which generate carbon dioxide, nitroso sulfonyl azo compound, N,N'-dimethyl-N,N'-dinitroso phthalamide, toluenesulfonyl hydrazide, p-toluenesulfonyl semicarbazide, p,p'-is oxybisbenzenesulfonyl semicarbazide which generate nitrogen, and the like can be cited. Especially, in view of processability, azodicarbonamide (ADCA), dinitrosopentamethylenetetramine (DPT) are preferable. Such foaming agents may be used alone or in combination of two or more thereof. Moreover, an amount of the foaming agent compounded is not particularly limited, but preferably falls within a range of 0.1 to 10 parts by mass in relation to 100 parts by mass of the rubber component. Note that the above foaming agent may be contained in the short fiber.

Moreover, the above foaming agent is desirably used in combination with a foaming assistant such as urea, zinc stearate, benzenesulfinic acid zinc, zinc white, and the like. These may be used alone or in combination of two or more thereof. The foaming aid is used together, thereby being capable of promoting a foaming reaction to enhance a completeness of the reaction and inhibiting an unnecessary deterioration over time.

Note that in a vulcanized rubber obtained after the vulcanization of the rubber composition containing the above foaming agent, a foaming ratio thereof is normally 1 to 50%, preferably 5 to 40%. When the foaming agent is compounded, if the foaming ratio is too large, a gap at a rubber surface becomes also large so that there is a risk that a sufficient ground contact is no longer ensured, whereas if the foaming ratio falls within the above range, an amount of bubbles can be suitably maintained while formation of bubbles which effectively function as a drainage groove is ensured so that there is also no risk that a durability is deteriorated. Herein, the foaming ratio of the vulcanized rubber as described above means an average foaming ratio Vs and specifically means a value calculated by Equation (I) below:

$$Vs = (\rho_0/\rho_1 - 1) \times 100 \ (\%) \cdots (I),$$

where $\rho_1$ denotes the density (g/cm$^3$) of the vulcanized rubber (foamed rubber), and $\rho_0$ denotes the density (g/cm$^3$) of the solid phase part in the vulcanized rubber (foamed rubber).

In the rubber composition of the present invention, the diene-based rubber component may be compounded with, together with the short fiber and the specific surface active agent, as well as the foaming agent and the foaming assistant as described above, as necessary, a compounding agent which is commonly used in the rubber industry, such as a filler, for example, a carbon black, a softening agent, stearic acid, an antiaging agent, zinc white, a vulcanization accelerator, and a vulcanizing agent may be suitably compounded within such an extent as not to impair the object of the present invention.

According to an aspect of the manufacturing method of the rubber composition of the present invention, the surface active agent is applied onto a surface of the short fiber in advance so as to be a composite which is then compounded with the diene-based rubber component. Thereby, without depending on a subsequent step, such as kneading, formation of a surface active agent layer on a short fiber surface can be further ensured.

As the tire of the present invention, the above rubber composition or the above vulcanized rubber after a vulcanization step is used. In accordance with a type and a member of the tire to be applied, the rubber composition as unvulcanized may be used and vulcanized after molding so as to be obtained, or a semi-vulcanized rubber after a pre-vulcanization step and the like may be used and molded, and then be further fully vulcanized so as to be obtained. Among various members of the tire, in view of being capable of sufficiently exhibiting favorable drainage performance, excellent fracture resistance and excellent wear resistance, application is preferably made to a tread member and preferably to a studless tire. Note that as a gas to be filled in the tire, an inert gas, such as nitrogen, argon or helium as well as the ordinary air or air with an oxygen partial pressure as adjusted, can be used.

EXAMPLES

Hereinafter, the present invention will be described more in detail with reference to examples and comparative examples.

Note that evaluation in the examples and the comparative examples was performed in accordance with the below matters.

(Dispersion Performance)

Using a microscope (VHX-500, manufactured by Keyence Corporation), the number of fibers present in the screen with a magnification of 100 times was counted, this was counted at 10 different points in the same rubber, and a standard deviation of the number of fibers was determined and indication in terms of index was made with respect to Comparative Example 1 as 100. It is indicated that the greater the index is, the more favorable a dispersion performance is.

(Foaming Ratio)

Using the above Equation (I), calculation was made.

(Tensile Strength (Tb))

According to JIS K 6301, a tensile strength (MPa) was determined.

(Tensile Strength after Foaming Ratio Compensation)

In accordance with Equation (II) below, a tensile strength (MPa) with a foaming ratio of 0% was calculated from the above tensile strength (Tb) obtained:

$$\text{Tensile strength after foaming ratio compensation} = \text{tensile strength}/\{(100 - \text{foaming ratio})/100\}(\text{MPa}) \cdots (\text{II}).$$

Indication in terms of index was made with respect to Comparative Example 1 as 100. It is indicated that the greater the index is, the higher a tensile strength is.

(Tensile Elongation)

According to JIS K 6301, an elongation after fracture (%) was measured, and indication in terms of index was made with respect to Comparative Example 1 as 100. It is indicated that the greater the index is, the higher a tensile elongation is.

(Surface Active Agent Adhesion Percentage)

A filter paper was weighed and a mass thereof was recorded. Then, a 3 to 5 g sample was put into the filter paper and a mass thereof was weighed in terms of 0.1 mg. The filter paper with the sample inside was inserted into a soxhlet extractor, and extraction was performed continuously over 8 or more hours using acetone as a solvent. After the extraction, the filter paper was taken out, dried using the air in a draft chamber, and then sufficiently dried in a dryer at 70°C. Using Equation (III) below, an extraction amount was calculated so as to be a surface active agent adhesion percentage in the composite:

surface active agent adhesion percentage = $100 \times (W_0 - W_1)/(\text{sample mass (g)}) \cdots (\text{III})$,

where Wo denotes the mass (g) of the filter and the sample before the extraction, and $W_1$ denotes the mass (g) of the filter and the sample after the extraction.

[Surface Active Agent]

Surface active agents having a combination as indicated in the below Table 1 were used as examples. Numerical values in the table are indicated in parts by mass

[Table 1]

| Surface Active Agent | Fatty Acid Polyhydric Alcohol Ester | Nonionic Ester Type Surface Active Agent | Alkanolamide Type Surface Active Agent | Sulfonic Acid Type Surface Active Agent |
|---|---|---|---|---|
| a-1 | 30 | 70 | | |
| a-2 | 30 | 60 | 10 | |
| a-3 | 30 | 60 | | 10 |
| a-4 | 40 | 50 | 5 | 5 |
| a-5 | 5 | 70 | 15 | 10 |
| b-1 | | 100 | | |
| c-1 | 50 | 10 | 20 | 20 |

In Table 1, each of the surface active agents is described as follows:

fatty acid polyhydric alcohol ester: Rheodol SP-L10 manufactured by Kao Corp;

EP 3 366 720 B1

nonionic ester type surface active agent: Rheodol TW-L120 manufactured by Kao Corp;

alkanolamide type surface active agent: Nymeen O-205 manufactured by NOF CORPORATION; and

sulfonic acid type surface active agent: Newcol 211-MB manufactured by Nippon Nyukazai Co., Ltd.

[Composite of Short Fiber and Surface Active Agent]

Composites were prepared using short fibers used in the examples as indicated by the below Table 2 and the surface active agents as indicated by the above Table 1. In preparing such composites, first, each component of the surface active agents as indicated in Table 1 was blended, then such a surface active agent was applied onto a surface of a polyethylene (PE) fiber (fiber X) having a fiber diameter of 10 $\mu$m or an ethylene-vinyl alcohol (EVOH) fiber (fiber Y) both as indicated in the below Table 2 in an amount of 0.5 parts by mass in relation to 100 parts by mass of the fiber, and a fiber as obtained was cut so as to have a length of 5 mm. Note that in Comparative Example 1 and Comparative Example 2, only respective short fibers were used without using a surface active agent.

A surface active agent adhesion percentage in the composite was calculated using the above Equation (III) and it was 0.45% by mass in any of Examples 1 to 14.

[Table 2]

| Composite Type | Composition of Composite |
| --- | --- |
| Fiber X | PE (manufactured by Japan Polyethylene Co., Ltd, Novatec HJ360 (MFR: 5.5, Tm: 132°C)) |
| Fiber B-1 | PE + Surface Active Agent b-1 |
| Fiber C-1 | PE + Surface Active Agent c-1 |
| Fiber A-1 | PE + Surface Active Agent a-1 |
| Fiber A-2 | PE + Surface Active Agent a-2 |
| Fiber A-3 | PE + Surface Active Agent a-3 |
| Fiber A-4 | PE + Surface Active Agent a-4 |
| Fiber A-5 | PE + Surface Active Agent a-5 |
| Fiber Y | EVOH (manufactured by Kuraray Co., Ltd., Evar G156B (Tm: 160°C)) |
| Fiber B-2 | EVOH + Surface Active Agent b-1 |
| Fiber C-2 | EVOH + Surface Active Agent c-1 |
| Fiber A-6 | EVOH + Surface Active Agent a-1 |
| Fiber A-7 | EVOH + Surface Active Agent a-2 |
| Fiber A-8 | EVOH + Surface Active Agent a-3 |
| Fiber A-9 | EVOH + Surface Active Agent a-4 |
| Fiber A-10 | EVOH + Surface Active Agent a-5 |

(Examples 1 to 14 and Comparative Examples 1 and 2)

Using the short fibers only and the composites as described above, in accordance with compounding recipes as indicated in the below Table 3 and Table 4 (parts by mass), each rubber composition was prepared.

Using each of rubber compositions as obtained for a tread, testing radial tires for automobiles (size: 195/65R15) were manufactured according to a common procedure, and tests of on-ice performance and wear resistance were performed. Each test method is described as below.

(Wear Resistance)

Using a vehicle using the above testing tires, a depth of a groove as remaining was measured after 10,000 km running on a paved road surface, running distances required for the tread to be worn by 1 mm were relatively compared with each other, and indication in terms of index was made with respect to a tire of Comparative Example 1 as 100. It

7

is indicated that the greater the index is, the more favorable a wear resistance performance is. Evaluation results are indicated in the below Tables 3 and 4.

(On-ice Performance)

The above four testing tires (size: 195/65R15) were mounted on a domestic passenger car of 1,600 CC class so as to check on-ice braking performance at an ice temperature of -1°C. Using the tire of Comparative Example 1 as a control, it is set that on-ice performance = (braking distance of control tire/braking distance of other examples) × 100. It is indicated that the greater the greater the numerical value is, the more excellent an on-ice performance is. Evaluation results are indicated in the below Tables 3 and 4.

Moreover, a relationship between fiber dispersion performance and on-ice performance in each of the examples and the comparative examples is illustrated in FIG. 1.

[Table 3]

| | Comparative Example 1 | Reference Example 1 | Reference Example 2 | Reference Example 3 | Reference Example 4 | Reference Example 5 | Example 6 | Example 7 |
|---|---|---|---|---|---|---|---|---|
| Natural Rubber*1 | 60 | 60 | 60 | 60 | 60 | 60 | 60 | 60 |
| Butadiene Rubber*2 | 40 | 40 | 40 | 40 | 40 | 40 | 40 | 40 |
| Carbon Black*3 | 30 | 30 | 30 | 30 | 30 | 30 | 30 | 30 |
| Silica*4 | 40 | 40 | 40 | 40 | 40 | 40 | 40 | 40 |
| Silane Coupling Agent*5 | 3.6 | 3.6 | 3.6 | 3.6 | 3.6 | 3.6 | 3.6 | 3.6 |
| Stearic Acid | 2 | 2 | 2 | 2 | 2 | 2 | 2 | 2 |
| Zinc White | 6 | 6 | 6 | 6 | 6 | 6 | 6 | 6 |
| Vulcanization Accelerator *6 | 1.2 | 1.2 | 1.2 | 1.2 | 1.2 | 1.2 | 1.2 | 1.2 |
| Insoluble Sulfur | 3.5 | 3.5 | 3.5 | 3.5 | 3.5 | 3.5 | 3.5 | 3.5 |
| Foaming Agent*7 | 7 | 7 | 7 | 7 | 7 | 7 | 7 | 7 |
| Fiber X | 5 | | | | | | | |
| Fiber B-1 | | 5 | | | | | | |
| Fiber C-1 | | | 5 | | | | | |
| Fiber A-1 | | | | 5 | | | | |
| Fiber A-2 | | | | | 5 | | | |
| Fiber A-3 | | | | | | 5 | | |
| Fiber A-4 | | | | | | | 5 | |
| Fiber A-5 | | | | | | | | 5 |
| Fiber Y | | | | | | | | |
| Fiber B-2 | | | | | | | | |
| Fiber C-2 | | | | | | | | |
| Fiber A-6 | | | | | | | | |
| Fiber A-7 | | | | | | | | |
| Fiber A-8 | | | | | | | | |
| Fiber A-9 | | | | | | | | |

(continued)

| | Comparative Example 1 | Reference Example 1 | Reference Example 2 | Reference Example 3 | Reference Example 4 | Reference Example 5 | Example 6 | Example 7 |
|---|---|---|---|---|---|---|---|---|
| Fiber A-10 | | | | | | | | |
| Foaming Ratio (%) | 32 | 34 | 33 | 33 | 34 | 35 | 33 | 33 |
| Dispersion Performance (Index) | 100 | 103 | 104 | 107 | 110 | 111 | 116 | 116 |
| Tensile Strength (Tensile Strength after Foaming Ratio Compensation) | 100 | 100 | 102 | 106 | 109 | 110 | 112 | 113 |
| Tensile Elongation (Index) | 100 | 100 | 102 | 106 | 107 | 109 | 114 | 115 |
| On-ice Performance (Index) | 100 | 101 | 101 | 103 | 105 | 108 | 113 | 112 |
| Wear Resistance (Index) | 100 | 101 | 103 | 104 | 108 | 111 | 109 | 112 |

*1: Grades of TSR 20 *2: cis-1,4-polybutadiene, "BR01", manufactured by JSR Co., Ltd.

*3: "carbon N220" manufactured by Asahi Carbon Co., Ltd.

*4: "Nipsil AQ" manufactured by Nihon Silica Co., Ltd.

*5: "Si69" manufactured by Degussa Co., Ltd.

*6: di-2-benzothiazyldisulfide, "NOCCELER DM", manufactured by Ouchi Shinko Chemical Industrial Co., Ltd.

*7: dinitrosopentamethylenetetramine (DPT), "Cellmic AN", manufactured by Sankyo Kasei Co., Ltd.

[Table 4]

| | Comparative Example 2 | Reference Example 8 | Reference Example 9 | Reference Example 10 | Reference Example 11 | Reference Example 12 | Example 13 | Example 14 |
|---|---|---|---|---|---|---|---|---|
| Natural Rubber*1 | 60 | 60 | 60 | 60 | 60 | 60 | 60 | 60 |
| Butadiene Rubber*2 | 40 | 40 | 40 | 40 | 40 | 40 | 40 | 40 |
| Carbon Black*3 | 30 | 30 | 30 | 30 | 30 | 30 | 30 | 30 |
| Silica *4 | 40 | 40 | 40 | 40 | 40 | 40 | 40 | 40 |
| Silane Coupling Agent*5 | 3.6 | 3.6 | 3.6 | 3.6 | 3.6 | 3.6 | 3.6 | 3.6 |
| Stearic Acid | 2 | 2 | 2 | 2 | 2 | 2 | 2 | 2 |
| Zinc White | 6 | 6 | 6 | 6 | 6 | 6 | 6 | 6 |
| Vulcanization Accelerator*6 | 1.2 | 1.2 | 1.2 | 1.2 | 1.2 | 1.2 | 1.2 | 1.2 |
| Insoluble Sulfur | 3.5 | 3.5 | 3.5 | 3.5 | 3.5 | 3.5 | 3.5 | 3.5 |
| Foaming Agent*7 | 7 | 7 | 7 | 7 | 7 | 7 | 7 | 7 |
| Fiber X | | | | | | | | |
| Fiber B-1 | | | | | | | | |
| Fiber C-1 | | | | | | | | |
| Fiber A-1 | | | | | | | | |
| Fiber A-2 | | | | | | | | |
| Fiber A-3 | | | | | | | | |
| Fiber A-4 | | | | | | | | |
| Fiber A-5 | | | | | | | | |
| Fiber Y | 5 | | | | | | | |
| Fiber B-2 | | 5 | | | | | | |
| Fiber C-2 | | | 5 | | | | | |
| Fiber A-6 | | | | 5 | | | | |
| Fiber A-7 | | | | | 5 | | | |
| Fiber A-8 | | | | | | 5 | | |
| Fiber A-9 | | | | | | | 5 | |

EP 3 366 720 B1

(continued)

| | Comparative Example 2 | Reference Example 8 | Reference Example 9 | Reference Example 10 | Reference Example 11 | Reference Example 12 | Example 13 | Example 14 |
|---|---|---|---|---|---|---|---|---|
| Fiber A-10 | | | | | | | | 5 |
| Foaming Ratio (%) | 32 | 32 | 33 | 31 | 34 | 31 | 32 | 31 |
| Dispersion Performance (Index) | 70 | 78 | 80 | 86 | 87 | 89 | 99 | 98 |
| Tensile Strength (Tensile Strength after Foaming Ratio Compensation) | 71 | 76 | 85 | 84 | 88 | 91 | 96 | 96 |
| Tensile Elongation (Index) | 76 | 78 | 80 | 81 | 83 | 86 | 92 | 90 |
| On-ice Performance (Index) | 105 | 107 | 109 | 111 | 112 | 113 | 116 | 116 |
| Wear Resistance (Index) | 80 | 82 | 83 | 86 | 86 | 87 | 94 | 92 |

**Claims**

1. A rubber composition comprising: a diene-based rubber component; a short fiber; and a surface active agent, wherein the short fiber and the surface active agent are blended in advance with each other to form a composite, and the composite is compounded;
   wherein the surface active agent contains a fatty acid polyhydric alcohol ester, a nonionic ester type surface active agent, an alkanolamide type surface active agent, and a sulfonic acid type surface active agent; and
   wherein in relation to 100 parts by mass of the surface active agent, 40 to 70 parts by mass of a nonionic ester type surface active agent is contained.

2. The rubber composition according to Claim 1, further comprising a foaming agent.

3. A tire using the rubber composition according to Claims 1 or 2.

4. The tire according to Claim 3 being a studless tire.


**Patentansprüche**

1. Kautschukzusammensetzung umfassend: eine Kautschukkomponente auf Dienbasis, eine Kurzfaser und ein oberflächenaktives Mittel,
   wobei die Kurzfaser und das oberflächenaktive Mittel im Voraus miteinander vermischt werden, um einen Verbundstoff zu bilden und der Verbundstoff compoundiert wird;
   wobei das oberflächenaktive Mittel einen mehrwertigen Fettsäurealkoholester, ein nichtionisches oberflächenaktives Mittel vom Estertyp, ein oberflächenaktives Mittel vom Alkanolamidtyp und ein oberflächenaktives Mittel vom Sulfonsäuretyp enthält; und
   wobei, im Verhältnis zu 100 Masseteilen des oberflächenaktiven Mittels, 40 bis 70 Masseteile eines nichtionischen oberflächenaktiven Mittels vom Estertyp enthalten sind.

2. Kautschukzusammensetzung nach Anspruch 1, ferner ein Schäumungsmittel umfassend.

3. Reifen, für den die Kautschukzusammensetzung nach den Ansprüchen 1 oder 2 verwendet wird.

4. Reifen nach Anspruch 3, der ein spikeloser Reifen ist.


**Revendications**

1. Composition de caoutchouc comprenant: un composant de caoutchouc à base de diène; une fibre courte; et un agent actif en surface,
   où la fibre courte et l'agent actif en surface sont mélangés à l'avance l'un avec l'autre pour former un composite, et le composite est malaxé;
   où l'agent actif en surface contient un ester de poly(alcool hydrique) d'acide gras, un agent actif en surface de type ester non ionique, un agent actif en surface de type alcanolamide, et un agent actif en surface de type acide sulfonique; et
   où en relation à 100 parties en masse de l'agent actif en surface, de 40 à 70 parties en masse d'un agent actif en surface de type ester non ionique sont contenues.

2. Composition de caoutchouc selon la revendication 1, comprenant en outre un agent moussant.

3. Pneumatique utilisant la composition de caoutchouc selon les revendications 1 ou 2.

4. Pneumatique selon la revendication 3 étant un pneumatique sans crampons.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006083264 A
- JP 2013056992 A
- WO 2014119671 A1
- JP H09249771 A
- JP 2014227487 A